# EUROPÄISCHE PATENTSCHRIFT

(11) **EP 0 923 685 B1**
(45) Veröffentlichungstag und Bekanntmachung des Hinweises auf die Patenterteilung: **02.04.2003**
(21) Anmeldenummer: 98941300.0
(22) Anmeldetag: 07.07.1998
(51) Int. Cl.: F16F 15/16, F16F 15/14

(54) **VORRICHTUNG ZUR SCHWINGUNGSDÄMPFUNG EINES ROTIERENDEN BAUELEMENTES, INSBESONDERE SCHWINGUNGSTILGER**
DEVICE FOR DAMPENING VIBRATIONS OF A ROTARY COMPONENT, IN PARTICULAR VIBRATION DAMPER
DISPOSITIF POUR L'AMORTISSEMENT DES VIBRATIONS D'UN COMPOSANT ROTATIF, EN PARTICULIER ANNULATEUR DE VIBRATIONS

(30) Priorität: 07.07.1997 DE 29711923 U; 07.07.1997 DE 19728894
(43) Veröffentlichungstag der Anmeldung: 23.06.1999
(73) Patentinhaber: Voith Turbo GmbH & Co. KG, 89522 Heidenheim (DE)
(72) Erfinder: BRENNER, Franz, D-89564 Nattheim (DE); HANKE, Wolfgang, D-89518 Heidenheim (DE); BROCKMANN, Rolf, D-89522 Heidenheim (DE)
(74) Vertreter: Dr. Weitzel & Partner
(86) Internationale Anmeldenummer: EP9804196
(87) Internationale Veröffentlichungsnummer: WO99002891

(56) Entgegenhaltungen:
- DE-C- 3 635 043
- DE-C- 3 916 575
- US-A- 5 088 964
- US-A- 5 695 035

## Beschreibung

Die Erfindung betrifft eine Vorrichtung zur Schwingungsdämpfung eines rotierenden Bauelementes, insbesondere einen Schwingungstilger, im Einzelnen mit den Merkmalen aus dem Oberbegriff des Anspruchs 1.

Vorrichtungen zur Schwingungsdämfung, insbesondere Schwingungstilger, sind in einer Vielzahl von Ausführungen bekannt. Unter Schwingungstilger wird dabei eine Vorrichtung verstanden, welche dem Abbau von im Antriebsstrang auftretenden Schwingungen, inbesondere von rotierenden Bauelementen und nicht der Dämpfung von Schwingungen bei der Drehmomentenübertagung zwischen zwei Bauelementen im Antriebsstrang dient. Der Tilger ist somit nicht an der Drehmomentenübertragung von einer An- auf eine Abtriebsseite beteiligt.

Ein Haupteinsatzfall derartiger Vorrichtungen ist die Schwingungsdämpfung im Bereich eines Teiles der Kurbelwelle, welcher dem Abtrieb der Verbrennungskraftmaschine, d.h. der Kopplung mit dem Antriebsstrang, gegenüberliegt und der dem Antrieb von Nebenaggregaten - bspw. einer Lüftereinrichtung - dient. Ein derartiges System in Form eines Viskosedrehschwingungstilgers umfaßt ein Primärteil und eine Sekundärmasse, welche als Schwungring bezeichnet wird. Das Primärteil ist mit dem freien Kurbelwellenende verschraubt und als geschlossenes Gehäuse ausgebildet. Im Inneren dieses Gehäuses ist als lose Masse die Sekundärmasse, der so genannte Schwungring, eingeschlossen und mit dem Primärteil nur durch das die Spalträume füllende Wirkmedium, bspw. in Form von Silikonöl gekoppelt. Der Schwungring wird radial durch eine ein- oder zweiteilige Lagerbuchse geführt. Die axiale Führung erfolgt entweder durch die Seitenflächen der Buchse oder durch einen zusätzlichen Ring. Die beiden Teile des Gehäuses sind verschweißt, verschraubt oder zusammengerollt. Die Kopplung der Sekundärmasse mit dem Primärteil durch das Wirkmedium stellt eine Dämpfungs- und Federkopplung zwischen dem Gehäuse und dem Schwungring dar. Das bedeutet, daß die durch eine Relativbewegung in Umfangsrichtung zwischen der Primär- und der Sekundärmasse von den Schubkräften geleistete Arbeit nicht vollständig in Wärme umgesetzt wird. Die Schubkräfte leisten bei einer sinusförmigen Relativbewegung der beiden Dämpfermassen auch einen nicht vernachlässigbaren verlustfreien Arbeitsanteil. Diese Art der Federkopplung erhöht die Wirksamkeit des Dämpfungseffektes und stellt deshalb einen nützlichen Effekt dar, welcher bei der Abstimmung des Dämpfers beachtet werden muß.

Der wesentliche Parameter bei der Abstimmung des Dämpfers ist die sogenannte Spaltzahl, in der alle auf die Schubspannung Enfluß nehmenden Abmessungen des Wirkraumes zusammengefaßt sind. Durch Multiplikation der Spaltzahl mit dem Speichermodul des Silikonöls erhält man dann die Torsionssteifigkeit und durch Multiplikation mit dem Verlustmodul den Dämpfungskoeffizienten des Viskosedrehschwingungstilgers. Der Speicherund der Verlustmodul des Silikonöls sind von der Erregerfrequenz der Öltemperatur und von der Ölsorte abhängig.

Der Zweck eines derartigen Schwingungstilgers ist die Minimierung der Torsionsbeanspruchung rotierender Bauelemente, insbesondere Wellen, bspw. der Kurbelwelle, mit der Nebenbedingung, daß die Schubspannungen des Silikonöls und die Wärmeleistung im Tilger innerhalb zulässiger Grenzen bleiben. Ein wesentlicher Nachteil eines derartigen Systems besteht darin, daß eine optimale Abstimmung durch Wahl des Dämfungskoeffizienten und der Torsionssteifigkeit nicht möglich ist, da beide Funktionen vom Silikonöl übernommen werden.

Des weiteren sind im Stand der Technik eine Reihe von Schwingungstilgern bekannt, welche als Dämpfungs- und Federkopplungsglied elastische Medien, bspw. einen Federring aus Gummi, wie in der EP 0 647 796 A1 offenbart, aufweisen. Dieser Schwingungstilger umfaßt einen Trägheitsring, der zumindest einen Federring aus Gummi aufweist und relativ verdrehbar in einer Welle festgelegt ist und der den Außenumfang der Welle unmittelbar anliegend berührt und durch den Trägheitsring unverdrehbar an die Welle angepresst ist. Die sich während der bestimmungsgemäßen Verwendung ergebenden Relatiwerlagerungen des Trägheitsringes beruhen ausschließlich auf einer elastischen Deformierung des Federringes in sich selbst. Die den Federring innen- und außenseitig begrenzenden Oberflächen berühren die sich berührenden Oberflächen einerseits der Welle und andererseits des Trägheitsringes völlig unverrückbar. Die sich bei der Einleitung von Längs- und/oder Drehschwingungen ergebenden Relatiwerlagerungen des Trägheitsringes bezogen auf die Welle werden ausschließlich durch eine elastische Deformierung des Federringes in sich selbst aufgenommen. Auch bei dieser Ausführung besteht das Problem darin, daß eine optimale Abstimmung auf den konkreten Einsatzfall durch die geeignete Wahl des Dämpfungskoeffizienten und der Steifigkeit nicht möglich ist, da zur Realisierung beider Funktionen das gleiche Kopplungsmedium, der elastische Federring, verwendet wird.

Als nächstliegender Stand der Technik wird die US-A-5 088 964 angesehen, die sämtliche Merkmale des Oberbegriffs des Anspruchs 1 zeigt. so offenbart diese schrift eine Vorrichtung zur Schwingungsdämpfung in Form einer elastischen Kupplung, umfassend eine Primärmasse und eine Sekundärmasse, wobei die Primärmasse drehfest mit einem rotierenden Bauelement gekoppelt ist und die Sekundärmasse ebenfalls drehfest mit dem Antriebsstrang gekoppelt ist. Beide - Primärteil und Sekundärmasse - sind über eine Dämpfungs- und Federkopplung miteinander koppelbar. Dabei sind erste Mittel zur Realisierung der Federkopplung in Form von Federeinheiten vorgesehen und weitere zweite Mittel zur Realisierung der Dämpfungskopplung in Form einer mit Hydraulikflüssigkeit.

Der Erfindung liegt die Aufgabe zugrunde, eine Vorrichtung zum Schwingungsabbau, insbesondere einen Schwingungstilger, derart weiterzuentwickeln, daß die im Stand der Technik genannten Nachteile vermieden werden. Im einzelnen sollen eine optimale Anpassung an den konkreten Einsatzfall durch geeignete Wahl des Dämpfungskoeffizienten und der Torsionssteifigkeit und eine hohe Betriebssicherheit sowie Verfügbarkeit erzielt werden. Die konstruktive Auslegung soll sich dabei durch einen geringen Platzbedarf, einfache Montage und vor allem geringe Kosten auszeichnen.

Die erfindungsgemäße Lösung der Aufgabe ist durch die Merkmale des Anspruchs 1 charakterisiert. Vorteilhafte Ausgestaltungen sind in den Unteransprüchen beschrieben.

Die Vorrichtung zur Schwingungsdämpfung eines rotierenden Bauelementes umfaßt erfindungsgemäß u.a. ein mit dem rotierenden Bauelement wenigstens mittelbar drehfest koppelbares Primärteil und eine Sekundärmasse in Form einer Trägheitsmasse, welche über eine Dämpfungs- und Federkopplung miteinander koppelbar sind. Erste Mittel zur Realisierung der Federkopplung und weitere zweite Mittel zur Realisierung der Dämpfungskopplung sind vorgesehen, wodurch eine funktionale Aufteilung auf unterschiedliche Einrichtungen bzw. Mittel gegeben ist. Die ersten Mittel zur Realisierung der Federkopplung und die zweiten Mittel zur Realisierung der Dämpfungskopplung sind dabei separaten, räumlich voneinander getrennt angeordneten Kammern, welche zwischen dem Primärteil und der Sekundärmasse ausgebildet werden, zugeordnet. Die Mittel zur Realisierung der Dämpfungskopplung umfassen wenigstens eine mit Hydraulikflüssigkeit befüllbare Kammer, welcher wiederum Mittel zur Beeinflussung des Dämpfungsverhaltens zugeordnet sind.

Vorzugsweise umfassen die Mittel zur Beeinflussung des Dämpfungsverhaltens wenigstens eine, einer Dämpfungskammer zugeordnete Drosselstelle, welche in der Vorrichtung zur Schwingungsdämpfung integriert ist. Vorzugsweise ist die Drosselstelle direkt in der Dämpfungskammer angeordnet.

Eine besonders kompakte und hinsichtlich ihrer Funktion zuverlässige Vorrichtung zur Schwingungsdämpfung umfaßt desweiteren dritte Mittel zur Begrenzung des Verdrehwinkels zwischen Primär- und Sekundärmasse, welche der Dämpfungskammer zugeordnet sind und die Dämpfungskammer in zwei Teilkammern unterteilen, welche über wenigstens eine Drosselstelle miteinander verbunden sind, wobei die dritten Mittel an der Bildung der Drosselstelle beteiligt sind. Für die Ausbildung der Drosselstelle bestehen die folgenden Möglichkeiten:
a) Integration der Drosselstelle in den dritten Mitteln;
b) Ausbildung der Drosselstelle zwischen den dritten Mitteln und den räumlichen Begrenzungen der Dämpfungskammer durch Primärteil und Sekundärmasse.

Diese Ausführung ermöglicht eine selbsttätig erfolgende Beeinflußbarkeit des Dämpfungsverhaltens durch Beeinflussung der in den einzelnen Teilkammern enthaltenen Dämpfungsmediummenge, welche bei Verdrehung des Primärteiles gegenüber der Sekundärmasse in Umfangsrichtung erzielt wird. Die dritten Mittel sind zu diesem Zweck entweder in Umfangsrichtung fest am Primärteil oder der Sekundärmasse angeordnet und erstrecken sich in die Dämpfungskammer hinein. Dabei können die dritten Mittel beispielsweise wenigstens einen, an der Sekundärmasse angeordneten Vorsprung umfassen, welcher in Aussparungen an das Primärteil in Einbaulage in Umfangsrichtung derart eingreift, daß der Vorsprung relativ gegenüber dem Primärteil verschiebbar ist. Die Aussparungen am Primärteil in Umfangsrichtung bilden dann einen Anschlag für den Vorsprung der Sekundärmasse. In Analogie dazu kann der Vorsprung auch am Primärteil ausgebildet sein und in die zur Bildung der Dämpfungskammer erforderlichen Ausnehmungen an der Sekundärmasse eingreifen.

Durch die passende Gestaltung der Spaltgeometrien und Flächen zwischen relativ zueinander bewegten Bauteilen von Primärteil und Sekundärmasse kann zusätzlich zur Verdrängungsdämpfung auch Scherdämpfung funktional im Schwingungstilger bzw. -dämpfer integriert werden.

Vorrichtungsmäßig ist das Primärteil dabei drehfest mit einem rotierenden Bauelement, beispielsweise in Form einer Welle, deren Schwingungen zu dämpfen bzw. abzubauen sind, koppelbar. Die Sekundärmasse, welche vorzugsweise in Form eines sogenannten Schwungringes ausgeführt ist, ist dem Primärteil in loser Form zugeordnet, und wird mittels einer entsprechenden Lagerung wenigstens radial geführt. Zwischen dem Primärteil und der Sekundärmasse sind Mittel zur Schwingungsübertragung in Form wenigstens einer, vorzugsweise in Umfangsrichtung angeordneten und wirksamwerdenden Druckfedereinrichtung vorgesehen. Des weiteren sind zwischen der Primär- und der Sekundärmasse Mittel zur Dämpfung von Längs- und/oder Drehschwingungen vorgesehen, welche einer Relativbewegung des Primärteiles gegenüber der Sekundärmasse entgegenwirken und die durch die Relativbewegung des Primärteiles gegenüber der Sekundärmasse von den Schubkräften geleistete Arbeit beispielsweise in Wärme umwandeln. Die Sekundärmasse ist dabei nicht mit weiteren Teilen des Antriebsstranges verbunden, so daß das gesamte Schwingungs-Dämpfungssystem nicht zur Drehmomentenübertragung verwendet wird.

Die erfindungsgemäße Lösung ermöglicht es, eine Vorrichtung zur Schwingungsdämpfung, insbesondere von Längs- und/oder Drehschwingungen an rotierenden Bauelementen, insbesondere Wellen zu schaffen, welche eine optimale Anpassung an den konkreten Einsatzfall ermöglicht. Insbesondere besteht bei der erfindungsgemäßen Lösung die Möglichkeit, die Federsteifigkeit des Systems sowie den Grad der Dämpfung unabhängig voneinander und wesentlich genauer und feiner zu steuern. Als die drei wesentlichsten Größen für die Auslegung der Vorrichtung zur Tilgung und Dämpfung von Schwingungen sind dabei
1) das Massenträgheitsmoment I der Sekundärmasse,
2) die Dämpfung sowie
3) die Feder- bzw. Torsionssteifigkeit anzusehen.

Die Dämpfung erfolgt hydraulisch mittels eines Dämpfungsmediums. Zu diesem Zweck umfassen die Mittel zur Dämpfung zwischen der Primär- und Sekundärmasse ein Hydraulikfluid, d.h. eine inkompressible Flüssigkeit, beispielsweise Öl.

Das Dämpfungsmedium wird dabei in separaten, im wesentlichen abgeschlossenen Kammern, die zwischen Primärteil und Sekundärmasse bei Vorsehung entsprechender zueinander komplementärer Ausnehmungen gebildet werden, eingebracht. Vorzugsweise wird das Dämpfungsmedium im Bereich der Einrichtung zur Realisierung der Verdrehwinkelbegrenzung vorgesehen. Auch eine vollständige Befüllung bzw. Ausfüllung des Zwischenraumes zwischen Primär- und Sekundärmasse zusätzlich oder in Übernahme der Funktion der Dämpfungskammer ist möglich

Gemäß der Erfindung erfolgt die Versorgung mit Hydraulikfluid als Dämpfungsmedium durch Austausch über ein Hydraulikflüssigkeitsversorgungssystem. Denkbar ist in diesem Zusammenhang auch die Ausbildung eines Kreislaufes, welcher es ermöglicht, die Hydraulikflüssigkeit immer auf einer konstanten Temperatur zu halten. In diesem Fall besteht die Möglichkeit auch qualitativ geringere Hydraulikflüssigkeiten als Dämpfungsmedium einzusetzen.

In der konstruktiven Ausführung ist das Primärteil, welche vorzugsweise als scheibenförmiges Element ausgeführt ist, wenigstens mittelbar drehfest mit dem rotierenden Bauelement im Antriebsstrang koppelbar, an welchem Längs- und/oder Drehschwingungen auftreten, die zu kompensieren sind. Dem Primärteil ist die Sekundärmasse, welche auch als Trägheitsmasse bezeichnet wird, zugeordnet. Zur wenigstens radialen Führung gegenüber dem Element, dessen Längs- und/oder Drehschwingungen gedämpft werden sollen, ist für die Sekundärmasse eine Lageranordnung, vorzugsweise in Form wenigstens einer Lagerbuchse, vorgesehen über welche diese sich auf dem rotierenden Bauteil abstützt. Es sind Mittel vorgesehen, die eine Rotation der Sekundärmasse in Form der Trägheitsmasse mit dem Primärteil während der Anlaufphase und den Beschleunigungsphasen gewährleisten. Die Übertragung der auftretenden Längs- und/oder Drehschwingungen bzw. Abstützung an der Sekundärmasse erfolgt mittels einer entsprechenden Einrichtung in Form wenigstens einer Druckfedereinheit. Die Druckfedereinheiten sind dabei auf einem bestimmten definierten Durchmesser vorzugsweise in Umfangsrichtung in entsprechenden Ausnehmungen am Primärteil angeordnet und stützen sich an der Sekundärmasse ab. Bezüglich der konstruktiv denkbaren Möglichkeiten der Federabstützung kann auf die Ausführungen entsprechend der Druckschriften DE-OS 36 35 043 und DE 39 16 575 verwiesen werden.

Über Federeinrichtungen werden die Schwingungen bei Relativbewegungen des Primärteiles gegenüber der Sekundärmasse von letzterer kompensiert.

Im Optimalfall, d.h. bei Nichtauftreten von Längs- und/oder Drehschwingungen an dem Antriebsaggregat, an welchem die Vorrichtung zur Schwingungsdämpfung angeordnet ist, rotieren Primär- und Sekundärmasse mit der gleichen Geschwindigkeit, d.h. es findet keine Relativbewegung zwischen beiden statt. Die zwischen beiden Elementen vorgesehenen Federeinrichtungen dienen lediglich während der Anfahrphase und den Beschleunigungsphasen der Mitnahme der Sekundärmasse. Ansonsten erfolgt im wesentlichen keine Drehmomentenübertragung.

Im Fall des Auftretens von Längs- und/oder Drehschwingungen am rotierenden Bauelement werden diese in das Primärteil eingeleitet. Über die Federeinrichtungen erfolgt eine Übertragung auf die Sekundärmasse in Folge der Relativbewegungen zwischen der Primär- und der Sekundärmasse. Die Sekundärmasse ist dabei hinsichtlich ihrer Trägheit derart auszulegen, daß diese ein bestimmtes Maß an Schwingungen ohne Probleme abstützt. Diese Auslegung erfolgt durch entsprechende Festlegung des Trägheitsmomentes I.

Die Abschwächung auftretender Relativbewegung erfolgt über entsprechende Mittel, vorzugsweise hydraulisch. In diesem Fall sind vorzugsweise im Bereich eines Anschlages zur Begrenzung des Verdrehwinkels Kammern vorgesehen, welche mit einer Hydraulikflüssigkeit befüllbar sind. Diese Flüssigkeit wird bei auftretender Relativbewegung zwischen Primärteil und Sekundärmasse verdrängt, stellt dabei jedoch einen Widerstand dar. Unter einem weiteren Aspekt können jedoch Dämpfungsmittel und Federkopplung in einer gemeinsamen Kammer integriert sein. In diesem Fall ist vorzugsweise auch die Drosselstelle mit in der Kammer integriert.

Des weiteren ist der Einsatz anderer elastisch deformierbarer Materialien denkbar, wobei eine Vielzahl von Anordnungsvarianten zwischen Primär- und Sekundärmasse möglich ist. Die Dämpfungsmedien können sich dabei über wenigstens einen Teil der radialen Abmessungen von Primär- und Sekundärmasse erstrecken oder aber im wesentlichen über die gesamte Abmessung. Eine Dämpfung kann im einfachsten Fall auch durch Reibung zwischen den beiden Massen - Primärteil und Sekundärmasse - erfolgen.

Vorzugsweise sind Einrichtungen vorgesehen, welche die Relativbewegung zwischen der Primär- und der Sekundärmasse in Umfangsrichtung begrenzen. Die Begrenzung wird mittels in Langlöchern geführten Schraubverbindungen realisiert. Dazu weist vorzugsweise das Primärteil auf einem bestimmten Durchmesser in Umfangsrichtung mindestens eine in Umfangsrichtung verlaufende längliche Öffnung, vorzugsweise in Form eines Langloches, auf. Die Sekundärmasse weist vorzugsweise wenigstens zwei Teile auf, welche eine bauliche Einheit bilden, - einen ersten Teil und einen zweiten Teil. Der erste Teil charakterisiert dabei im wesentlichen die Trägheitsmasse, während der zweite Teil als Deckelscheibe zur Abdichtung des Primärteiles dient. Das Trägheitsmoment dieses zweiten Teiles ist vorzugsweise verhältnismäßig gering. Erster Teil und zweiter Teil der Sekundärmasse umschließen das Primärteil und sind dabei über entsprechende Verbindungselemente miteinander gekoppelt. Die Kopplung erfolgt dabei über das Primärteil, wobei die Verbindungselemente durch entsprechende Durchgangsöffnungen auf einem bestimmten Durchmesser in Umfangsrichtung des Primärteiles hindurchgeführt sind. Die Größe dieser Durchgangsöffnungen am Primärteil in Umfangsrichtung bestimmt die Größe des Verdrehwinkels des Primärteiles gegenüber der Sekundärmasse aufgrund der eingeleiteten Längs- und/oder Drehschwingungen.

Bezüglich der Möglichkeiten, insbesondere der konstruktiven Ausführung der hydraulischen Dämpfung wird auf die Druckschrift DE 38 41 692 verwiesen.

Die erfindungsgemäße Lösung ermöglicht es, eine konstruktiv einfach gestaltete Vorrichtung zur Schwingungsdämpfung eines rotierenden Bauelementes für unterschiedliche Einsatzzwecke bereitzustellen, wobei eine optimale Auslegung in Anpassung an den konkreten Einsatzfall durch geeignete Auswahl des entsprechenden Trägheitsmomentes I der Sekundärmasse, der Federsteifigkeit, der Mittel zur Kompensation der Schwingungen und der Dämpfung erfolgen kann. Aufgrund der Einfachheit des Aufbaus zeichnet sich diese Variante auch durch geringe Kosten aus.

Das Gesamtsystem bietet den Vorteil der Realisierung einer optimalen Anpassung des Schwingungsdämpfers an den konkreten Einsatzfall mit möglichst geringer Bauteilanzahl, da die einzelnen Einflußgrößen durch konstruktive Auslegung unabhängig voneinander veränderbar und festlegbar sind, wodurch der Montageaufwand und die Kosten des Gesamtsystems relativ gering gehalten werden.

Die Vorrichtung kann in unterschiedlichsten Systemen eingesetzt werden, beispielsweise in Werkzeugmaschinen, Bearbeitungsmaschinen oder Druckmaschinen.

Die erfindungsgemäße Lösung wird nachfolgend anhand von Figuren erläutert. Darin ist im einzelnen Folgendes dargestellt:
- Fig.1: zeigt ein Ausführungsbeispiel einer erfindungsgemäßen Vorrichtung zur Schwingungsdämpfung eines rotierenden Bauteiles im Axialschnitt;
- Fig.2: zeigt in einer Ansicht einen Ausschnitt auf das Primärteil entsprechend Fig.1.

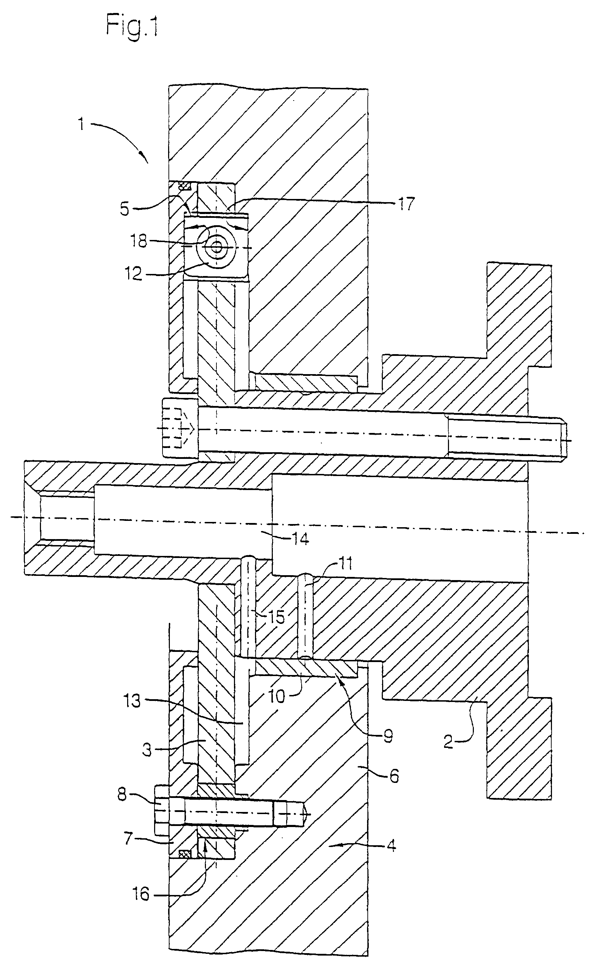

Die Figur 1 verdeutlicht im Axialschnitt eine Ausführung einer Vorrichtung zur Schwingungsdämpfung 1 eines rotierenden Bauelementes, insbesondere einen Schwingungstilger, welcher zur Dämpfung von Längs- und/oder Drehschwingungen an einem rotierenden Bauelement, bspw. einer Welle 2 eingesetzt wird. Der Tilger 1 umfaßt dazu zwei Massen, ein erstes sogenanntes Primärteil 3 und eine zweite sogenannte Sekundärmasse 4. Die Sekundärmasse 4 wird auch als Trägheitsmasse oder Schwungring bezeichnet. Das Primärteil 1 ist drehfest mit dem rotierenden Bauelement, dessen Schwingungen gedämpft werden sollen, d.h der Welle 2, koppelbar. Im dargestellten Fall ist das Primärteil 3 drehfest mit der Welle 2 verbunden. Das Primärteil 3 ist im einfachsten Fall als scheibenförmiges Element ausgeführt, welches in Umfangsrichtung auf einem bestimmten Durchmesser d₁ Ausnehmungen 5, vorzugsweise in Form von Durchgangsöffnungen, aufweist. Die Sekundärmasse 4 umfaßt im einfachsten Fall einen ersten Teil in Form eines Schwungringes 6. Im dargestellten Ausführungsbeispiel ist zusätzlich ein, mit dem Schwungring 6 drehfest gekoppelter zweiter Teil 7 vorgesehen. Die Verbindung zwischen dem ersten Teil 6 und dem zweiten Teil 7 erfolgt dabei über Verbindungselemente 8, welche vorzugsweise in Form von Schraubverbindungen ausgeführt sind. Die radiale Führung der Sekundärmasse 4 erfolgt über eine Lageranordnung 9. Die Lageranordnung 9 umfaßt dazu eine Lagerbuchse 10, welche zwischen der Welle 2 und der Sekundärmasse 4 in radialer Richtung angeordnet ist. Die Lagerung ist dabei als Gleitlagerung ausgeführt und wird über einen Schmiermittelanschluß 11 mit Schmiermittel versorgt. Im dargestellten Fall erfolgt die Schmiermittelzufuhr über die Welle 2.

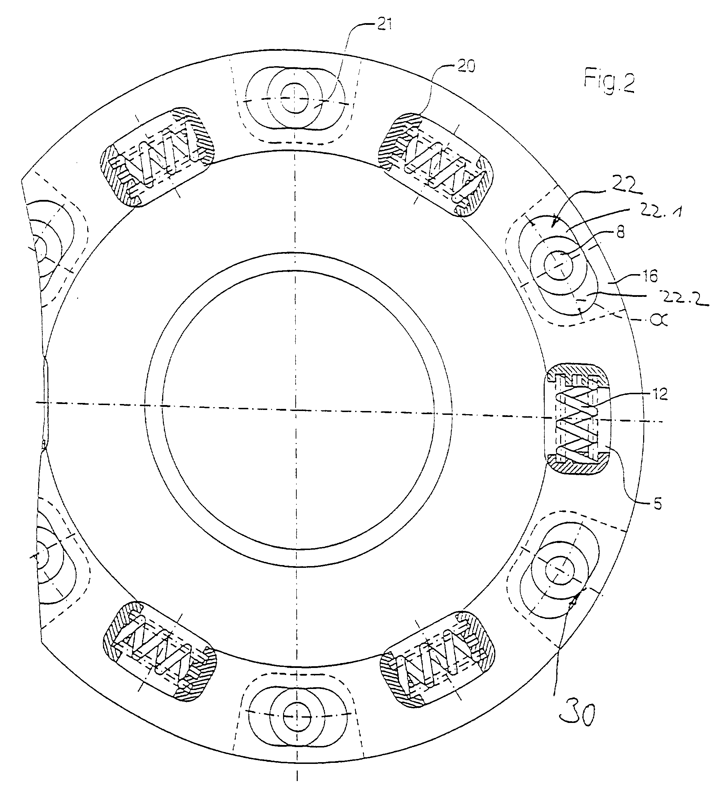

Die Sekundärmasse 4 ist lose gegenüber dem Primärteil 3 angeordnet bzw. gelagert. Eine Kopplung zwischen den beiden Massen wird zur Realisierung der Federkopplung über wenigstens eine Federeinrichtung 12 realisiert, welche wenigstens eine Druckfedereinrichtung umfaßt. Die Federeinrichtung 12 ist zu diesem Zweck in den Ausnehmungen 5 in dem Primärteil angeordnet, erstreckt sich in Umfangsrichtung des Primärteiles 3 und stützt sich an der Sekundärmasse 4 ab. Die Funktion der Federeinrichtung 12 besteht darin, während der Anlauf- und/oder Beschleunigungsphasen Drehmoment auf die Sekundärmasse zu übertragen um diese in Rotation zu versetzen. Im Betrieb, d.h. bei Rotation der Welle 2 im Optimalfall, in welchem keinerlei Schwingungen auftreten, rotieren beide - Primärteil 3 und Sekundärmasse 4 - mit der gleichen Geschwindigkeit. In diesem Fall erfolgt keine Übertragung von Drehmoment auf die Sekundärmasse oder nur im geringem Maße. Letzeres wird ledigleich mitgenommen.
Bezüglich der Realisierung der Abstützung der Federeinrichtungen zwischen Primär- und Sekundärmasse kann auf die Ausführungen entsprechend der DE 36 35 043 und DE 39 16 575 verwiesen werden. Es ist beispielsweise denkbar, daß im vorliegenden Fall beide Teile 6 und 7 der Sekundärmasse auf einem bestimmten Durchmesser d₂ in Umfangsrichtung verlaufende fensterförmige Ausschnitte aufweisen, welche hinsichtlich des Abstandes untereinander und ihrer Größe im wesentlichen komplementär zu den die Federeinrichtungen 12 aufnehmenden Aussparungen am Primärteil ausgebildet sind. Beide Teile greifen beidseitig tangential an die Federeinrichtungen oder , wie in Figur 2 dargestellt, an die deren Enden zugeordneten Führungsstücke 20. Des weiteren trifft dies auch für die Aussparung 5 am Primärteil zu.

Im Fall des Auftretens von Längs- und/oder Drehschwingungen an der Welle 2 werden diese über die drehfeste Kopplung des Primärteiles 3 mit der Welle 2 in das Primärteil 3 eingeleitet. Unter Wirkung eines Torsionsmomentes im Betrieb des rotierenden Bauelementes kommt es dann zum Zusammendrücken der Federeinrichtungen 12 und damit zur Relativbewegung zwischen der Primär- und der Sekundärmasse, was zur Einstellung eines gewissen Verdrehwinkels alpha führt, wobei die Schwingungen von der Sekundärmasse 4 kompensiert werden.

Zur Dämpfung der Relativbewegung zwischen dem Primärteil 3 und der Sekundärmasse 4 sind entsprechende Mittel vorgesehen. Im dargestellten Fall erfolgt die Dämpfung über eine Hydraulikflüssigkeit. Diese wird in einen Zwischenraum zwischen dem Primärteil 3 und der Sekundärmasse 4, welcher hier mit 13 bezeichnet wird, eingefüllt. Die Befüllung des Zwischenraumes kann dabei derart erfolgen, daß gegenüber dem Bereich, in welchem sich die Federeinrichtungen 12 befinden, zusätzliche, hier im einzelnen nicht dargestellte Kammern, welche zwischen Primär- und Sekundärmasse gebildet werden können, ausgefüllt werden. Im dargestellten bevorzugten Fall besteht die Möglichkeit, die Dämpfungskammer 22 zwischen der, das Verbindungselement 8 umschließenden Buchse 21 und dem Langloch 16 zu bilden. Die Dämpfungskammer 22 wird dabei durch das Verbindungselement 8 in zwei Teilkammern 22.1 und 22.2 unterteilt, welche über wenigstens eine, zwischen Verbindungselement 8 und den Begrenzungen der Dämpfungskammer 22 durch die in das Primärteil 3 eingearbeiteten Langlöcher 16 gebildete Drosselstelle 30 miteinander in Verbindung stehen. Für die Befüllung bei Hydraulikflüssigkeit ergeben sich eine Vielzahl unterschiedlicher Möglichkeiten. Im dargestellten Fall erfolgt die Versorgung beispielsweise mit Hydraulikflüssigkeit über eine entsprechende Hydraulikflüssigkeitszufuhreinrichtung 14 über die Welle 2. Die Befüllung des Zwischenraumes 13 kann dabei einmalig erfolgen oder aber je nach Einsatzfall über die rotierenden Aggregate. Es besteht dabei theoretisch auch die Möglichkeit die Zufuhr bzw. die Versorgung mit Hydraulikflüssigkeit im Zwischenraum derart zu gestalten, daß das im Zwischenraum vorhandene Hydraulikfluid bei Erwärmung auch ausgetauscht werden kann. Zu diesem Zweck sind entsprechende Abfuhrleitungen vorzusehen. Der dargestellte Fall verdeutlicht die Möglichkeit der Versorgung des Zwischenraumes 13 mit Hydraulikflüssigkeit über das Hydraulikflüssigkeitszufuhrsystem 14. Bestandteil dieses Hydraulikflüssigkeitszufuhrsystems ist dabei das Betriebsmittel bzw. Schmiermittelsystem der Welle 2, welches über eine Verbindungsleitung 15 mit dem Zwischenraum 13 gekoppelt ist. Aus dem gleichen Betriebsmittel bzw. Schmiermittelversorgungssystem wird auch die Lageranordnung 10 mit Schmiermittel versorgt.

Der Verdrehwinkel α in Umfangsrichtung des Primärteiles 3 gegenüber der Sekundärmasse 4, welcher ein Zusammendrücken der Federeinrichtung 12, welche vorzugsweise wenigstens eine Druckfeder umfaßt, kann entsprechend der Ausführung in Figur 1 begrenzt werden. Die Begrenzung erfolgt dabei durch entsprechende Anschläge am Primärteil 3. Diese Anschläge werden über Langlöcher 16 in das Primärteil 3, welche auf einem bestimmten Durchmesser in Umfangsrichtung angeordnet und in Umfangsrichtung vorzugsweise in gleichmäßigen Abständen zueinander verteilt sind, realisiert. Der Sekundärmasse 4 sind dazu Vorsprünge im Bereich des Durchmessers d₂ zugeordnet, welche in Einbaulage in die Aussparungen bzw. die Langlöcher des Primärteiles 3 hineinragen. Die Vorsprünge sind dabei derart auszuführen, daß die Langlöcher ohne Probleme in Umfangsrichtung gegenüber den Vorsprüngen verschiebbar sind. Es ist auch denkbar, die Funktion des vorsprungtragenden Elementes dem Primärteil zuzuweisen und die Aussparungen am Sekundärteil bzw. der Sekundärmasse vorzusehen.

Eine Reibung zwischen beiden, d.h den Vorsprüngen der Sekundärmasse 4 und dem Primärteil ist zu vermeiden. Die Vorsprünge können dabei Bestandteil der Sekundärmasse 4 sein, d.h. eine bauliche Einheit mit dieser bilden oder aber über zusätzliche Elemente realisiert werden. Im dargestellten Fall übernehmen die Verbindungselemente 8, welche den ersten Teil 6 der Sekundärmasse 4 mit dem zweiten Teil 7 drehfest miteinander verbinden die Funktion dieser Vorsprünge. Das Verbindungselement 8 erstreckt sich dabei durch das Langloch 16 des Primärteiles 3. Über diese Kopplung und Zuordnung zum Primärteil 3, d.h. im dargestellten Fall des Umschließens des Primärteiles 3 in axialer und radialer Richtung und entsprechender Gestaltung der Lagerung der Sekundärmasse 4, und zusätzlicher Elemente wird die Sekundärmasse 4 in axialer Richtung fixiert. Das Langloch bzw. die Langlöcher 16, welche sich in Umfangsrichtung am Primärteil 3 erstrecken, bilden dann den Anschlag für das Verbindungselement 8, welches bei Relativbewegung des Primärteiles 3 gegenüber der Sekundärmasse 4 den möglichen Verdrehwinkel α begrenzt. Der Drehwinkel α ist dabei durch die Erstreckung I der Langlöcher 16 in Umfangsrichtung begrenzt. Die Nutzung von Verbindungselementen zur Realisierung dieser Anschlag- bzw. Begrenzungsfunktion für den Verdrehwinkel α ermöglicht es, ein kompaktes System mit einfachen, leicht austauschbaren Bestandteilen zu schaffen. Bei einer Ausführung der Sekundärmasse 4 mit Vorsprüngen, die mit der Sekundärmasse 4 eine bauliche Einheit bilden, wären zusätzliche Maßnahmen zur axialen Fixierung der Sekundärmasse 4 erforderlich.

Die Figur 2 verdeutlicht einen Ausschnitt einer Ansicht auf den Primärteil 3 entsprechend der Figur I. Daraus sind ersichtlich die Langlöcher 16. Die Erstreckung der Langlöcher in Umfangsrichtung I, das Verbindungselement 8 und die Ausnehmungen für die Federeinrichtungen 12, welche hier lediglich nur angedeutet sind, wobei die Ausnehmungen hier mit 5 bezeichnet sind. Die gleichen Ausnehmungen befinden sich auch an den in Einbaulage anliegenden Bereichen der Sekundärmasse 4. Diese sind dort mit 17 bzw. 18 für den zweiten Teil der Sekundärmasse 4 bezeichnet.

## Patentansprüche

1. Vorrichtung zur Schwingungsdämpfung eines rotierenden Bauelementes, insbesondere Tilger mit Massenkraftkompensation
1.1 mit einem mit dem rotierenden Bauelement wenigstens mittelbar drehfest koppelbaren Primärteil (3);
1.2 mit einer Sekundärmasse;
1.3 das Primärteil (3) und die Sekundärmasse (4) sind über eine Dämpfungs- und Federkopplung miteinander koppelbar;
1.4 mit ersten Mitteln (12) zur Realisierung der Federkopplung und weiteren zweiten Mitteln zur Realisierung der Dämpfungskopplung;
1.5 die ersten Mittel (12) zur Realisierung der Federkopplung und die zweiten Mittel zur Realisierung der Dämpfungskopplung sind separaten, räumlich voneinander getrennt zwischen Primärteil (3) und Sekundärmasse (4) gebildeten Kammern zugeordnet;
1.6 die Mittel zur Realisierung der Dämpfungskopplung umfassen wenigstens eine mit Hydraulikflüssigkeit befüllbare Kammer (22), weicher Mittel zur Beeinflussung des Dämpfungsverhaltens zugeordnet sind, wobei die Mittel zur Beeinflussung des Dämpfungsverhaltens in der Vorrichtung zur Schwingungsdämpfung integriert sind, **gekennzeichnet durch** die folgenden Merkmale:
1.7 die zweiten Mittel umfassen wenigstens ein Hydraulikflüssigkeitsversorgungssystem das mit einem Zwischenraum (13) zwischen Primärteil (3) und Sekundärmasse (4) gekoppelt ist.

2. Vorrichtung zur Schwingungsdämpfung nach Anspruch 1, **dadurch gekennzeichnet, daß** die Mittel zur Beeinflussung des Dämpfungsverhaltens in der Dämpfungskammer (22) integriert sind.

3. Vorrichtung zur Schwingungsdämpfung nach Anspruch 2, **dadurch gekennzeichnet, daß** die Mittel zur Beeinflussung des Dämpfungsverhaltens wenigstens eine Drosselstelle (30) umfassen.

4. Vorrichtung zur Schwingungsdämpfung nach einem der Ansprüche 1 bis 3, **gekennzeichnet durch** die folgenden Merkmale:
4.1 mit dritten Mitteln zur Begrenzung des Verdrehwinkels zwischen dem Primärteil und der Sekundärmasse (4);
4.2 die dritten Mittel sind der Dämpfungskammer (22) zugeordnet;
4.3 die dritten Mittel unterteilen die Dämpfungskammer (22) in zwei in ihrer Größe veränderliche Teilkammern und bilden eine Drosselstelle (30) zwischen beiden Teilkammern.

5. Vorrichtung zur Schwingungsdämpfung nach Anpruch 4, **gekennzeichnet durch** die folgenden Merkmale:
5.1 das dritte Mittel umfaßt wenigstens einen an der Sekundärmasse (4) angeordneten Vorsprung;
5.2 der Vorsprung greift in Aussparungen am Primärteil in Einbaulage in Umfangsrichtung derart ein, daß dieser relativ gegenüber dem Primärteil verschiebbar ist;
5.3 die Aussparungen im Primärteil in Umfangsrichtung bilden einen Anschlag mit dem Vorsprung der Sekundärmasse.

6. Vorrichtung zur Schwingungsdämpfung nach Anspruch 5, **dadurch gekennzeichnet, daß** der Vorsprung über ein Verbindungselement (8) in Form einer Schraube realisiert wird.

7. Vorrichtung zur Schwingungsdämpfung nach einem der Ansprüche 1 bis 6, **dadurch gekennzeichnet, daß** das erste Mittel wenigstens eine in Umfangsrichtung zwischen Primärteil (3) und Sekundärmasse (4) wirksam werdende Federeinrichtung umfassend wenigstens eine Druckfeder (12) umfaßt.

8. Vorrichtung zur Schwingungsdämpfung nach Anspruch 7, **gekennzeichnet durch** die folgenden Merkmale:
8.1 das Primärteil (3) umfaßt in Umfangsrichtung verlaufende erste Ausnehmungen (5);
8.2 die Sekundärmasse (4) umfaßt in Einbaulage zu den ersten Ausnehmungen (5) am Primärteil (3) hinsichtlich deren Abstand und Größe im Wesentlichen komlementäre zweite Ausnehmungen;
8.3 jeder Federeinrichtung (12) ist an den Federenden jeweils ein Führungskörper (20) zugeordnet, an welchen die beiden Massen - Primärteil und Sekundärmasse - im Bereich der Ausnehmungen tangential angreifen.

9. Vorrichtung zur Schwingungsdämpfung nach einem der Ansprüche 1 bis 8, **dadurch gekennzeichnet, daß** die Steifigkeit der Federkopplung über die Anzahl und/oder Auslegung der einzelnen Druckfedereinrichtungen (12) erfolgt.

## Claims

1. An apparatus for vibration damping a rotating component, especially dampers with mass force compensation,
1.1 with a primary part (3) which can be coupled at least indirectly in a torsionally rigid way with the rotating component;
1.2 with a secondary mass;
1.3 with the primary part (3) and the secondary mass (4) being mutually couplable via a damping and spring coupling;
1.4 with first means (12) for realizing the spring coupling and further second means for realizing the damping coupling;
1.5 with the first means (12) for realizing the spring coupling and the second means for realizing the damping coupling being associated with separate chambers which are formed in a spatially separated manner between the primary part (3) and secondary mass (4);
1.6 with the means for realizing the damping coupling, comprising at least one chamber (22) which can be filled with a hydraulic liquid and is associated with means for influencing the damping behaviour, with the means for influencing the damping behaviour being integrated in the apparatus for vibration damping, **characterized by** the following features:
1.7 the second means comprise at least one hydraulic liquid supply system which is coupled with an intermediate space (13) between primary part (3) and secondary mass (4).

2. An apparatus for vibration damping as claimed in claim 1, **characterized in that** the means for influencing the damping behaviour are integrated in the damping chamber (22).

3. An apparatus for vibration damping as claimed in claim 2, **characterized in that** the means for influencing the damping behaviour comprise at least one throttle place (30).

4. An apparatus for vibration damping as claimed in one of the claims 1 to 3, **characterized by** the following features:
4.1 with third means for limiting the angle of twist between the primary part and the secondary mass (4);
4.2 the third means are associated with the damping chamber (22);
4.3 the third means subdivide the damping chamber (22) into two partial chambers which are changeable with respect to their size, and form a throttle place (30) between the two partial chambers.

5. An apparatus for vibration damping as claimed in claim 4, **characterized by** the following features:
5.1 the third means comprises at least one projecting part arranged on the secondary mass (4);
5.2 the projecting part engages in recesses in the primary part in the installed position in the circumferential direction, such that the same is displaceable relatively to the primary part;
5.3 the recesses in the primary part form in the circumferential direction a stop with the projecting part of the secondary mass.

6. An apparatus for vibration damping as claimed in claim 5, **characterized in that** the projecting part is realized via a connecting element (8) in form of a screw.

7. An apparatus for vibration damping as claimed in one of the claims 1 to 6, **characterized in that** the first means comprises at least one spring device which becomes effective in the circumferential direction between primary part (3) and secondary mass (4) and comprises at least one pressure spring (12).

8. An apparatus for vibration damping as claimed in claim 7, **characterized by** the following features:
8.1 the primary part (3) comprises first recesses (5) extending in the circumferential direction;
8.2 the secondary mass (4) comprises in the installed position second recesses which are substantially complementary to the first recesses (5) on the primary part (3) with respect to their distance and size;
8.3 each spring device (12) is associated at the spring ends with one guide body (20) each, upon which the two masses, namely primary part and secondary mass, act tangentially in the zone of the recesses.

9. An apparatus for vibration damping as claimed in one of the claims 1 to 8, **characterized in that** the stiffness of the spring coupling is implemented via the number and/or configuration of the individual pressure spring devices (12).

## Revendications

1. Dispositif d'amortissement des vibrations d'un élément rotatif, notamment amortisseur avec compensation de la force due à la masse
1.1 avec une pièce primaire (3) fixée du moins indirectement en rotation avec l'élément rotatif ;
1.2 avec une masse secondaire ;
1.3 la pièce primaire (3) et la masse secondaire (4) sont reliées ensemble par l'intermédiaire d'amortisseurs et de ressorts d'accouplement ;
1.4 avec des premiers moyens (12) destinés à réaliser le couplage par ressorts et d'autres moyens seconds destinés à réaliser le couplage par amortisseurs ;
1.5 les premiers moyens (12) destinés à réaliser le couplage par ressorts et les seconds moyens destinés à réaliser le couplage par amortisseurs sont affectés à des chambres séparées ménagées entre la pièce primaire (3) et la masse secondaire (4) ;
1.6 les moyens destinés à réaliser le couplage par amortisseurs comportent au moins une enceinte (22) destinée à être remplie de fluide hydraulique, des moyens destinés à influencer le comportement d'amortissement étant affectés à ladite enceinte et intégrés dans le dispositif d'amortissement des vibrations,
**caractérisé par** les dispositions suivantes :
1.7 les seconds moyens comportent au moins un système d'alimentation en fluide hydraulique relié à un espacement (13) prévu entre la pièce primaire (3) et la masse secondaire (4).

2. Dispositif d'amortissement des vibrations selon la revendication 1, **caractérisé en ce que** les moyens destinés à influencer le comportement d'amortissement sont intégrés dans l'enceinte d'amortissement (22).

3. Dispositif d'amortissement des vibrations selon la revendication 2, **caractérisé en ce que** les moyens destinés à influencer le comportement d'amortissement comportent au moins un étranglement (30).

4. Dispositif d'amortissement des vibrations selon l'une quelconque des revendications 1 à 3, **caractérisé par** les dispositions suivantes :
4.1 avec des troisièmes moyens destinés à limiter l'angle de torsion entre la pièce primaire et la masse secondaire (4) ;
4.2 les troisièmes moyens sont affectés à l'enceinte d'amortissement (22) ;
4.3 les troisièmes moyens divisent l'enceinte d'amortissement (22) en deux chambres de dimensions variables et forment un étranglement (30) entre les deux chambres.

5. Dispositif d'amortissement des vibrations selon la revendication 4, **caractérisé par** les dispositions suivantes :
5.1 le troisième moyen comporte au moins une saillie disposée sur la masse secondaire (4) ;
5.2 la saillie est engagée dans des découpes ménagées en direction circonférentielle dans la pièce primaire en position d'insertion de manière à pouvoir coulisser par rapport à la pièce primaire ;
5.3 les découpes ménagées dans la pièce primaire en direction circonférentielle forment une butée avec la saillie de la masse secondaire.

6. Dispositif d'amortissement des vibrations selon la revendication 5, **caractérisé en ce que** la saillie est réalisée par un élément de liaison (8) sous forme de vis.

7. Dispositif d'amortissement des vibrations selon l'une quelconque des revendications 1 à 6, **caractérisé en ce que** le premier moyen comporte au moins un système de ressorts entrant en action dans la direction circonférentielle entre la pièce primaire (3) et la masse secondaire (4), ledit système de ressorts comprenant au moins un ressort de compression (12).

8. Dispositif d'amortissement des vibrations selon la revendication 7, **caractérisé par** les dispositions suivantes :
8.1 la pièce primaire (3) comporte des premiers évidements (5) ayant une direction circonférentielle ;
8.2 la masse secondaire (4) comporte des évidements seconds qui, en position d'insertion, sont complémentaires en matière d'écartement et de taille aux premiers évidements (5) prévus sur la pièce primaire (3) ;
8.3 un corps de guidage (20), auquel sont tangentiellement fixées, dans la région des évidements, les deux masses - la pièce primaire et la masse secondaire - est affecté à l'extrémité respective des ressorts de chaque système de ressorts (12).

9. Dispositif d'amortissement des vibrations selon l'une des revendications 1 à 8, **caractérisé en ce que** la rigidité des ressorts d'accouplement est obtenue en fonction du nombre et/ou du dimensionnement des différents systèmes de ressort de compression (12).
